# EUROPEAN PATENT SPECIFICATION

(11) **EP 1 308 661 B1**
(45) Date of publication and mention of the grant of the patent: **29.09.2004**
(21) Application number: 01309327.3
(22) Date of filing: 02.11.2001
(51) Int. Cl.: F16L 17/06, F16L 23/18, F16L 23/06

(54) **Vacuum flange o-ring centering ring**
O-Ring Träger für Vakuumflansch
Support de joint torique pour bride à vide

(43) Date of publication of application: 07.05.2003
(73) Proprietor: ITT MANUFACTURING ENTERPRISES, INC., Wilmington, Delaware 19801 (US)
(72) Inventor: Sillmon, Roger S., Troutville, Virginia 24175 (US)
(74) Representative: Esser, Wolfgang

(56) References cited:
- EP-A- 0 042 168
- US-A- 3 747 963
- US-A- 5 773 841
- US-A- 5 839 765

## Description

### FIELD OF THE INVENTION

The present invention relates generally to sealing arrangements for vacuum flanged tubing connections and like components and more particularly to an O-ring positioning and holding fixture for ISO-NW type vacuum flanged tubing or components.

### BACKGROUND OF THE INVENTION

Prior art vacuum flange O-ring centering rings are typically constructed from aluminum or stainless steel, and are designed to hold an elastomeric O-ring in position during the assembly and use of ISO-NW vacuum sealing flanges for tubing connections. Such centering rings only function to hold the O-ring in position for sealing to the flat sealing surfaces of the flanges and to prevent the O-ring from moving inward when gas pressure inside the tubing is lower than the gas pressure outside the tubine. Typical prior art designs are described for example in US-A-5839765 and EP-A-0042168.

Two major shortcomings are associated with prior art centering ring designs. The shortcoming has to do with the diameter of the inner surface of the centering ring not matching the diameter of the inner surface of typical vacuum tubing and like components with ISO-NW vacuum flange connections. This shortcoming produces a stepped inner surface at the tubing (or component) connection. The stepped inner surface produces a turbulent gas flow effect, know as sudden expansion and/or sudden contraction (Vena contracta). The viscous flow of gases through this type of tubing connection will have turbulent flow with eddy current flow and total gas flow losses. This shortcoming can cause gas phase reactions, condensation, and premature clogging in some types of machinery gas piping.

The other shortcoming associated with prior art centering ring designs has to do with their "straight edge" outer surface design. The outer annular side surface of present centering rings are perpendicular to the annular face surfaces of the ring. This produces a 90 degree ring shoulder which mates with the counter bore area of the sealing flange. The 90 degree ring shoulder of prior art centering ring designs require the sealing surfaces of the sealing flanges to be aligned nearly parallel with each other when assembling the centering ring and the vacuum tubing, to prevent binding.

Accordingly, a need exists for an improved vacuum flange O-ring centering ring that substantially eliminates the turbulent gas flow and binding problems of prior art vacuum flange O-ring centering ring designs. These problems are overcome by a combination as specified in claim 1. Further aspects are defined in the sub-claims.

### BRIEF DESCRIPTION OF THE DRAWINGS

For the purpose of illustrating the present invention, reference should be made to the following drawings wherein:
FIG. 1 is a perspective view of a vacuum flange O-ring centering ring according to an exemplary embodiment of the present invention;
FIG. 2 is top view of the O-ring centering ring of FIG. 1;
FIG. 3A is a cross-sectional side view through line 3A-3A of the O-ring centering ring of FIG. 2;
FIG. 3B illustrates the O-ring centering ring of FIG. 3A with an O-ring installed thereon;
FIG. 4A is an exploded perspective view depicting an exemplary application of the O-ring centering ring of the present invention to a vacuum tubing assembly;
FIG. 4B is a perspective view of the vacuum tubing assembly of FIG. 4A fully assembled;
FIG. 5A is a cross-sectional side view through line 5A-5A of the vacuum tubing assembly of FIG. 4B; and
FIG. 5B illustrates the self-aligning aspect of the combination of the present invention as it applies to the components shown assembled in FIG. 5A.

### DETAILED DESCRIPTION OF THE INVENTION

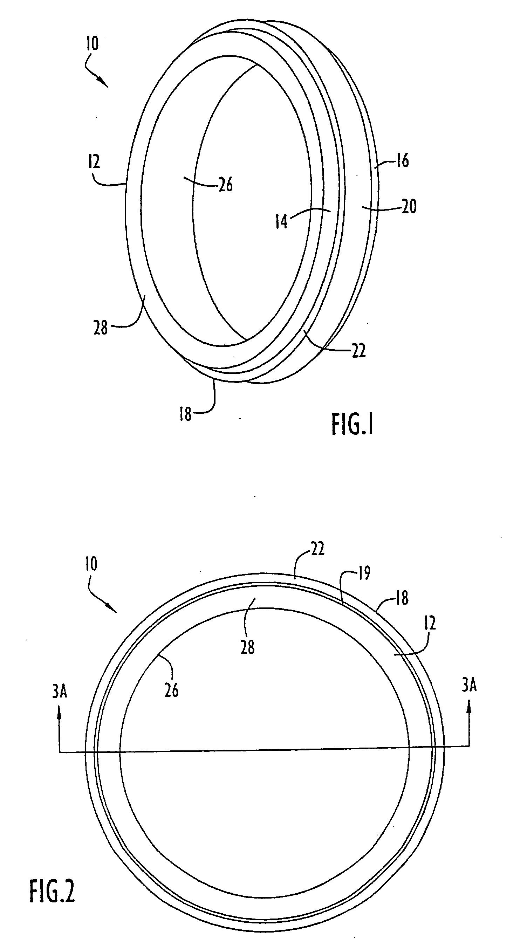

Referring collectively to FIGS. 1, 2, and 3A, a vacuum flange O-ring centering ring of the combination of the present invention according to an exemplary embodiment shown and identified generally by the numeral 10. The O-ring centering ring 10 comprises an annular body 12 having an inner cylindrical surface 26 and first and second beveled circumferential outer surfaces 14, 16 that lead or merge with an ourwardly extending annular O-ring positioning flange 18. The O-ring positioning flange 18 defines a pair of substantially flat annular stop surfaces 22, 24 and an annular concave O-ring seating surface 20 that extends therebetween. The annular body 12 also defines first and second annular face surfaces 28, 30 which respectively extend between the first and second beveled circumferential outer surfaces 14, 16 and the inner cylindrical surface 26.

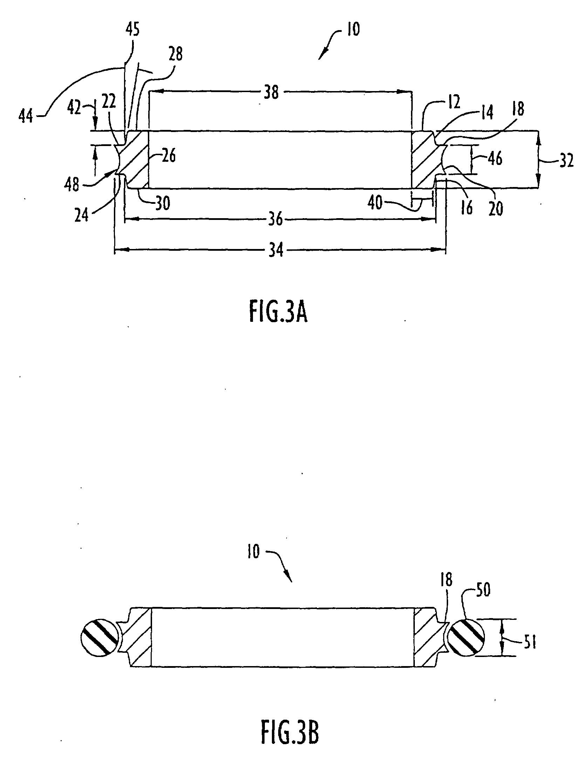

The O-ring centering ring 10 is fabricated from any appropriate material for the intended gas exposure application, such as aluminum or stainless steel. The exemplary embodiment shown in FIGS. 1, 2, and 3A is a 40 millimeter size for NW-40 flanges. Accordingly, the centering ring 10 has an outer diameter 36 measured at the junction where the first or second beveled annular outer surfaces 14, 16 merge with the O-ring positioning flange 18 of approximately 41 mm (1.614 inches). The O-ring positioning flange defines an outer diameter 34 of approximately 44 mm (1.730 inches) and the inner cylindrical surface 26 of the centering ring 10 defines an inner diameter 38 of approximately 35 mm (1.370 inches). The centering ring 10 has a height or thickness 32 as measured between the first and second annular face surfaces 28, 39 of approximately 8.2 mm (.324 inches) and each of the first and second annular face surfaces has a width 40 of approximately 2.75 mm (.108 inches). Each of the first and second beveled circumferential outer surfaces 14, 16 has a height 42 of approximately 2.16 mm (085) inches and are inclined at an angle 44 of approximately 10 degrees as measured from a reference line 45 which is perpendicular to the annular stop surfaces 22, 24 of the O-ring positioning flange 18. The O-ring seat 20 has a width 46 of approximately 3.9 mm (.154 inches) and a radius of approximately 2.64mm (.104 inches). This allows the O-ring seat 20 to receive an elastomeric O-ring 50 having a diameter 51 of approximately 5.3mm (.210) inches as shown in FIG. 3B. The O-ring 50 fitted to the centering ring 10 of the present invention can be made from silicone or any other suitable elastomeric material depending upon the working temperature, the gas used, and the vacuum of the system.

It should be understood, that the dimensions given above are for illustrative purposes only, and that O-ring centering ring of the present invention can be extended to all ISO-NW sizes by proportional sizing of the 40 millimeter design shown and described here.

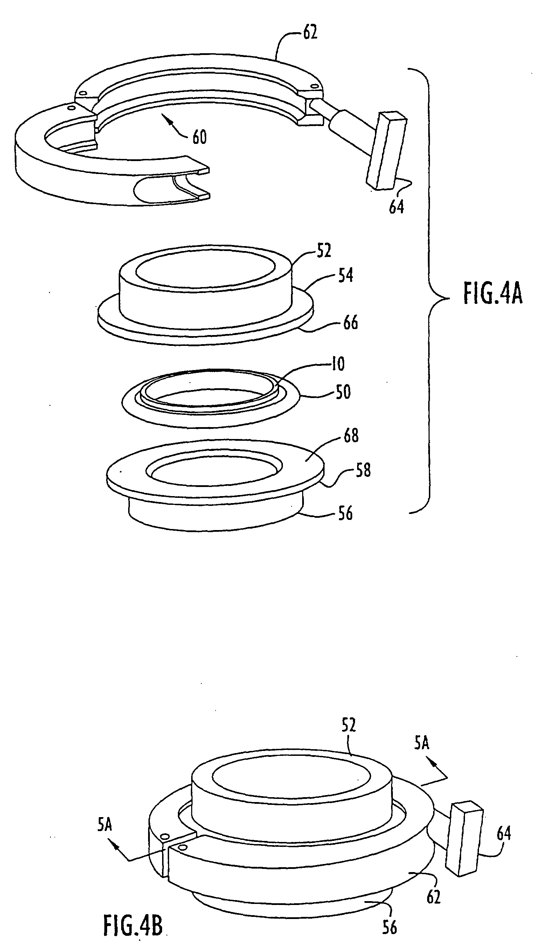

Referring now to FIG. 4A , the O-ring centering ring 10 of the combination of the present invention is shown assembled between first and second vacuum tubing sections 52, 56 having respective first and second ISO-NW vacuum flanges 54, 58 which are compressed together by a clamping ring assembly 60 comprised of a split clamping ring 62 and a clamping ring thumb-screw fastener 64. The O-ring centering ring 10 positions and holds the O-ring 50 in place between respective sealing surfaces 66, 68 of the first and second ISO-NW vacuum flanges 54, 58. The vacuum tubing sections 52, 56 are shown fully assembled in FIG. 4B.

Referring to FIG. 5A, a cross-sectional view through line 5A-5A of the fully assembled vacuum tubing sections 52, 56 of FIG. 4B is shown. As can be seen, the annular inner surface 26 of the centering ring 10 is constructed to be flush with the inner surfaces 70, 72 of the ISO-NW flanged tubing sections 52, 56 to provide a smooth bore transition across the connection. Accordingly, O-ring centering ring 10 of the present invention overcomes the problem of sudden expansion and/or sudden contraction effects that are common to gas piping systems that employ prior art centering rings at these connections.

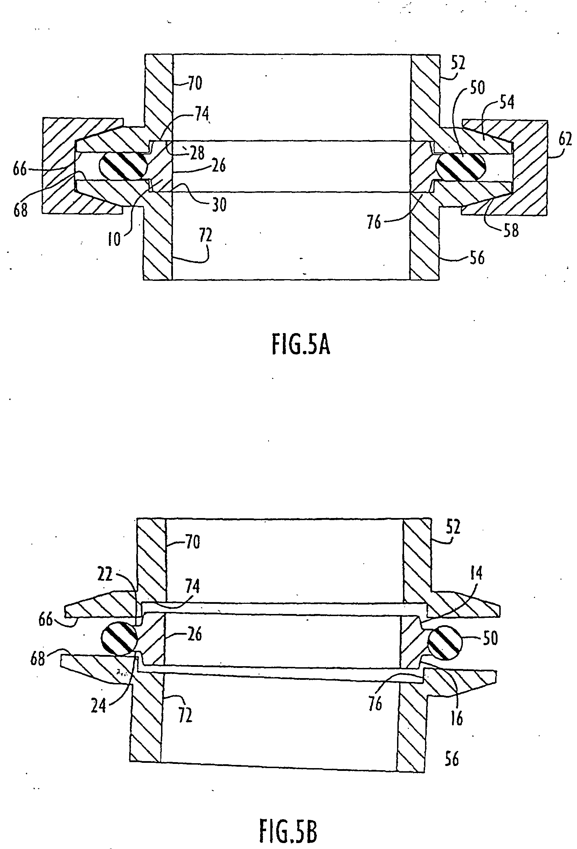

Furthermore the first and second beveled circumferential outer surfaces 14, 16 substantially prevents the centering ring 10 from binding as it is inserted in counterbores 74, 76 defined in the ISO-NW flanges 54, 58. More specifically, the beveled annular outer surfaces 14, 16 provided on the centering ring 10 at the point of contact thereof to the counterbores 74, 76 operate to self align the centering ring 10 to a central position relative to the counter bores 74, 76 during assembly, even if the flanges 54, 58 are not aligned parallel initially as shown in FIG. 5B.

Each of the counterbores is comprised of a cylindrical counterbore surface which engages one of the beveled surface portions of the centering ring, and an annular counterbore surface which is perpendicular to the cylindrical counterbore surface, and which contacts one of the spaced apart annular surfaces of the centering ring.

Referring again to FIG. 5A, the annular stop surfaces 22, 24 of the O-ring flange 18 engage the sealing surfaces 66, 68 of the flanges 54, 58 to prevent the O-ring 50 from being overly compressed as it conforms to the sealing surfaces 66, 68 to provide a tight seal therebetween. As in prior art designs, the centering ring 10 of the present invention also functions to prevent the O-ring 50 from moving inward when gas pressure inside the tubing is lower than the gas pressure outside the tubing.

The O-ring centering ring 10 of the combination of the present invention can be used for all ISO-NW type vacuum flanged tubing or components without any modification to the flange. This includes any vacuum or gas flow systems which use the ISO-NW type of flange connections. Examples of such systems are, but not limited to semiconductor processing equipment, chemical etching systems, plasma or reactive ion etching systems, thin film chemical vapor deposition or epitaxy systems, and medium vacuum processing equipment.

## Claims

1. The combination of a vacuum flange O-ring centering ring (10) for holding a single elastomeric O-ring (50) and a pair of vacuum sealing flanges (54, 58) having counterbores (74, 76) in which the centering ring is mounted, said centering ring comprising:
an annular body (12) defining a circumferential outer surface, a cylindrical inner surface (26) and a pair of spaced apart annular surfaces (28, 30) which extend between said circumferential outer surface and said cylindrical inner surface; and
an annular flange (18) having a peripheral groove(20) said flange (18) disposed on said outer circumferential surface midway between the pair of spaced apart annular surfaces (28, 30)and extending outwardly therefrom,
an elastomeric O-ring (50) being positioned in said peripheral groove (20);
wherein said outer circumferential surface includes two beveled surface portions (14, 16) each of which extends between said annular flange (18) and one of said annular surfaces (28,30);
said beveled surfaces portions being inserted in respective counterbores (74, 76) in said vacuum sealing flanges,
wherein each counterbore is defined by a cylindrical counterbore surface and an annular counterbore surface perpendicular thereto, and each beveled surface portion contacts said cylindrical counterbore surface to prevent binding during insertion.

2. The combination of claim 1 wherein each of said vacuum sealing flanges (54, 58) includes an annular flange surface (66, 68) perpendicular to said cylindrical counterbore surface for compressing the elastomeric O-ring.

3. The combination of claim 2 wherein said annular flange (18) has respective stop surfaces (22, 24) which form respective junctions with said beveled surface portions, for engaging said annular flange surfaces (66,68) of said respective vacuum sealing flanges for preventing the elastomeric O-ring (50) from becoming overly compressed.

4. The combination of at least one of claim 1 to 4 wherein said beveled surface portions are inclined at an angle of approximately 10 degrees as measured from a reference line which is parallel to the cylindrical counterbore surfaces.

5. The combination of claim 1 wherein each of the vacuum sealing flanges (54, 58) has an inner cylindrical surface (70, 72) dimensioned such that when the centering ring is mounted with the beveled surfaces against the respective cylindrical counterbore surfaces and the spaced apart annular surfaces against the annular counterbore surfaces, the inner cylindrical surfaces of the flanges are flush with the cylindrical inner surface of the centering ring.

## Patentansprüche

1. Kombination eines O-Ring-Zentrierrings (10) für Vakuumflansche zum Halten eines einzelnen Elasbomer-O-Rings (50) mit einem Paar von Vakuumdichtflanschen (54, 58), die Einsenkungen (74, 76) aufweisen, in welchen der Zentrierring montiert wird, welcher Zentrierring enthält:
einen ringförmigen Körper (12), der eine äußere Umfangsfläche, eine zylindrische Innenfläche (26) und ein Paar von beabstandeten Ringflächen (28, 30) bildet, die zwischen der äußeren Umfangsfläche und der zylindrischen Innenfläche verlaufen; und
einen ringförmigen Flansch (18), der eine Umfangsnut (20) hat, welcher Flansch (18) an der äußeren Umfangsfläche in der Mitte zwischen dem Paar der beabstandeten ringförmigen Ringflächen (28, 30) angeordnet ist und von diesen nach außen verläuft,
einen Elastomer-O-Ring (50), der in der Umfangsnut (20) positioniert ist;
wobei die äußere Umfangsfläche zwei abgefaste Oberflächenabschnitte (14, 16) enthält, die jeweils zwischen dem ringförmigen Flansch (18) und einer der Ringflächen (28, 30) verlaufen;
welche abgefasten Obertlächenabschnitte in jeweilige Einsenkungen (74, 76) in den Vakuumdichtflanschen eingesetzt sind,
wobei jede Einsenkung durch eine zylindrische Einsenkungsfläche und eine dazu senkrechte ringförmige Einsenkungsfläche gebildet ist und jeder abgefaste Oberflächenabschnitt die zylindrische Einsenkungsfläche berührt, um eine Bindung während des Einsetzens zu verhindern.

2. Kombination nach Anspruch 1, bei welcher die Vakuumdichtflansche (54, 58) eine ringförmige Flanschoberfläche (66, 68) senkrecht zu der zylindrischen Einsenkungsfläche zum Zusammendrücken des Elastomer-O-Rings enthalten.

3. Kombination nach Anspruch 2, bei welcher der ringförmige Flansch (18) jeweilige Stopflächen (22, 24) hat, die jeweils Verbindungen mit den abgefasten Oberflächenabschnitten für den Eingriff der ringförmigen Flanschflächen (66, 68) der jeweiligen Vakuumdichtflansche bilden, um zu verhindern, dass der Elastomer-O-Ring (50) übermäßig komprimiert wird.

4. Kombination nach mindestens einem der Ansprüche 1 bis 4, bei welcher die abgefasten Oberflächenabschnitte in einem Winkel von annähernd 10 Grad, gemessen von einer Bezugslinie, die parallel zu den zylindrischen Einsenkungsflächen ist, geneigt sind.

5. Kombination nach Anspruch 1, bei welcher jeder der Vakuumdichtflansche (54, 58) eine innere zylindrische Fläche (70, 72) hat, die so dimensioniert ist, dass dann, wenn der Zentrierring mit den abgefasten Oberflächen gegen die jeweiligen zylindrischen Einsenkungsflächen und den beabstandeten ringförmigen Rächen gegen die ringförmigen Einsenkungsflächen montiert ist, die inneren zylindrischen Oberflächen der Flansche bündig mit der zylindrischen inneren Oberfläche des Zentrierrings sind.

## Revendications

1. Combinaison formée d'une bague de centrage de joint torique (10) pour bride à vide destinée à tenir un joint torique unique en élastomère (50) et d'une paire de brides d'étanchéité à vide (54, 58) ayant des contre-perçages (74, 76) dans lesquels est montée la bague de centrage, ladite bague de centrage comprenant :
un corps annuiaire (12) définissant une surface extérieure circonférentielle, une surface intérieure cylindrique (26) et une paire de surfaces annulaires (28, 30) espacées l'une de l'autre, qui s'étendent entre ladite surface extérieure circonférentielle et ladite surface intérieure cylindrique ; et
une bride annulaire (18) ayant une gorge périphérique (20), ladite bride (18) étant disposée sur ladite surface extérieure circonférentielle à mi-chemin entre la paire de surfaces annulaires (28, 30) espacées et s'étendant vers l'extérieur depuis celles-ci,
un joint torique élastomère (50) étant positionné dans ladite gorge périphérique (20) ;
dans laquelle ladite surface circonférentielle extérieure inclut deux portions de surface en biseau (14, 16) qui s'étendent chacune entre ladite bride annulaire (18) et l'une desdites surfaces annulaires (28, 30) ;
lesdites deux portions de surface en biseau étant insérées dans des contre-perçages respectifs (74, 76) dans lesdites brides d'étanchement à vide,
et dans laquelle chaque contre-perçage est défini par une surface de contre-perçage cylindrique et par une surface de contre-perçage annulaire perpendiculaire à celle-ci, et chaque portion de surface en biseau vient en contact avec ladite surface de contre-perçage cylindrique pour empêcher un grippage pendant l'insertion.

2. Combinaison selon la revendication 1, dans laquelle chacune desdites brides d'étanchement à vide (54, 58) inclut une surface de bride annulaire (66, 68) perpendiculaire à ladite surface de contre-perçage cylindrique pour comprimer le joint torique élastomère.

3. Combinaison selon la revendication 2, dans laquelle ladite bride annulaire (18) a des surfaces d'arrêt respectives (22, 24) qui forment des jonctions respectives avec lesdites portions de surface en biseau pour engager lesdites surfaces de bride annulaires (66, 68) desdites brides d'étanchement à vide respectives afin d'empêcher au joint torique élastomère (50) de devenir excessivement comprimé.

4. Combinaison selon l'une au moins des revendications 1 à 3, dans laquelle lesdites portions de surface en biseau sont inclinées sous un angle d'approximativement 10°, tel que mesuré depuis une ligne de référence qui est parallèle auxdites surfaces de contre-perçage cylindriques.

5. Combinaison selon la revendication 1, dans laquelle chacune des brides d'étanchement à vide (54, 58) possède une surface cylindrique intérieure (70, 72) de dimension telle que lorsque la bague de centrage est montée avec les surfaces en biseau contre les surfaces de contre-perçages cylindriques respectifs, et avec les surfaces annulaires écartées contre les surfaces de contre-perçages annulaires, les surfaces cylindriques intérieures des brides sont en affleurement avec la surface cylindrique intérieure de la bague de centrage.
